# EUROPÄISCHE PATENTSCHRIFT

(11) **EP 0 431 453 B1**
(45) Veröffentlichungstag und Bekanntmachung des Hinweises auf die Patenterteilung: **13.03.1996**
(21) Anmeldenummer: 90122704.1
(22) Anmeldetag: 28.11.1990
(51) Int. Cl.: H04Q 7/28, H04B 7/26

(54) **Funksystem**
Radio system
Système radio

(30) Priorität: 02.12.1989 DE 3939903
(43) Veröffentlichungstag der Anmeldung: 12.06.1991
(73) Patentinhaber: AEG MOBILE COMMUNICATION GmbH, D-89081 Ulm (DE)
(72) Erfinder: Olbrich, Dieter, W-7903 Laichingen (DE)
(74) Vertreter: Körner, Ekkehard, Dipl.-Ing.

(56) Entgegenhaltungen:
- WO-A-87/01537
- WO-A-88/10547

## Beschreibung

Die Erfindung bezieht sich auf ein Verfahren zur Rufnummernzuteilung und Funkkommunikation in einem Funksystem mit einer Zentrale und mehreren über individuelle eigene Rufnummern selektiv anrufbaren Teilnehmern.

Bei Funksystemen deren Teilnehmerstruktur gering organisatorisch oder hierarchisch ausgeprägt ist, insbesondere bei häufig wechselnder Gruppenzusammensetzung und Aufgabenzuordnung, erfordern herkömmliche Selektivrufsysteme einen erheblichen Aufwand für Organisation und Abwicklung von Funkverbindungen der Teilnehmer untereinander, mit einer Zentrale oder Drahtteilnehmern.

Aus der WO 88/10 547 ist ein Verfahren zur Kanal zuweisung bei einem Funkkommunikationssystem bekannt, bei dem ein rufender Teilnehmer der Zentralstation seine Individualnummer und seinen Rufwunsch (Einzelruf oder Gruppenruf) übermittelt. In der Individualnummer ist auch ein Zuweisungsschlüssel dieses Teilnehmers zu einer Gruppe enthalten. Die Zentralstation ruft den Teilnehmer unter seiner Individualnummer zurück und weist den Teilnehmer einen Kanal zu, auf dem der Teilnehmer dann seinen Anruf an den oder die von ihm gewünschten Teilnehmer absetzen kann. Sofern der Gruppenschlüssel des rufenden Teilnehmers der Zentrale nicht bekannt ist, wird der Teilnehmer von der Zentrale aufgefordert, den Schlüssel mitzuteilen. Wenn der Teilnehmer seine Gruppenzugehörigkeit wechselt, teilt er dieses der Zentrale mit, um sicherzustellen, daß er jederzeit auch über Gruppenruf erreichbar ist.

Die WO 87/01 537 beschreibt ein Funkkommunkationssystem, in dem einer Vielzahl von Teilnehmern nur wenige Funkkanäle zur Verfügung stehen. Die mobilen Teilnehmer sind in Gruppen geordnet und haben die zugewiesene Gruppe ausdrückende Kennungen. Für Notfallsituationen ist es einem Anrufer möglich, die Gruppenzuweisung eines anderen Teilnehmers zu überwinden, um diesen zum Antworten zu veranlassen, auch wenn dessen Gruppe durch den Notruf nicht speziell angesprochen worden ist. Es ist ferner eine Umprogrammierung der Teilnehmer möglich, jedoch nur durch eine spezielle autorisierte Sendestation.

Der Erfindung liegt die Aufgabe zugrunde, ein Verfahren anzugeben, mit dem eine Rufnummernzuweisung zu Teilnehmern und eine darauf aufbauende Funkkommunikation möglich ist, die häufig wechselnden Gruppen zusammensetzungen und Aufgabenzuordnungen der Teilnehmer auf einfache Weise Rechnung tragen kann.

Die Erfindung ist im Patentanspruch 1 beschrieben. Die abhängigen Ansprüche enthalten vorteilhafte Ausgestaltungen und Weiterbildungen der Erfindung.

Die Erfindung ist veranschaulicht unter Bezugnahme auf ein Funksystem für einen Flughafen mit einigen wesentlichen Tätigkeiten, die einzeln oder in Gruppen wechselnder Zusammensetzung erledigt werden. Ein Großteil der Tätigkeiten kann gruppenweise der Betreuung eines Flugzeugs, das üblicherweise durch die Flugnummer, evtl. ergänzt durch die Fluggesellschaft eindeutig gekennzeichnet ist, zugeordnet werden. In diesem Beispiel ist der häufige Wechsel des Objekts (gekennzeichnet durch Flugnummer) besonders augenfällig. Die verschiedenen Objekte und die unterschiedlichen Tätigkeiten dabei können durch eine mehrstellige Objektbezeichnung definiert werden. Ausgegangen wird von einer dezentralen Arbeitsaufnahme jeweils anfallender Arbeiten durch die einzelnen Teilnehmer.

Bei Arbeitsaufnahme sendet der Teilnehmer über sein Teilnehmergerät mit individueller eigener Rufnummer ein Anforderungstelegramm an die Zentrale, das die eigene Rufnummer und eine Objektbezeichnung (Tätigkeit, Flugnummer) enthält. Die Zentrale erhält auf die Weise Kenntnis davon, daß ein Teilnehmer mit bestimmter eigener Rufnummer bei der übermittelten Flugnummer die angegebene Tätigkeit begonnen hat. Wenn die eigene Rufnummer bereits tätigkeitsgebunden ist, braucht die Objektbezeichnung keinen Tätigkeitshinweis zu enthalten.

Die Zentrale teilt daraufhin nach einer gespeicherten Zuordnungsvorschrift dem Teilnehmer, vorzugsweise unter Beachtung der Objektbezeichnung eine objektbezogene Rufnummer zu und übermittelt diese an das Teilnehmergerät. Die zugeteilte objektbezogene Rufnummer wird mit Bezug auf die Objektbezeichnung im Teilnehmergerät und mit Bezug auf den Teilnehmer und die Objektbezeichnung in der Zentrale gespeichert. Für dieselbe Objektbezeichnung im Anforderungstelegramm können gleiche, unter Einbeziehung von aus der eigenen Rufnummer des Teilnehmers ableitbaren Informationen (z.B. Tätigkeiten), aber auch verschiedene Rufnummern zugeteilt werden.

Als Beispiel für die Objektbezeichnungen und deren Informationsinhalt könnte beispielsweise angegeben werden
- 11 - 454: Rampagent für Flug 454 der Gesellschaft 1
- 12 - 454: Flightmanager für Flug 454 der Gesellschaft 1
- 13 - 454: Tankwagenfahrer für Flug 454 der Gesellschaft 1
- 21 - 743: Rampagent für Flug 743 der Gesellschaft 2
- 22 - 743: Flightmanager für Flug 743 der Gesellschaft 2
- 23 - 743: Tankwagenfahrer für Flug 743 der Gesellschaft 2.

Diese Zuordnung ist rein willkürlich, ohne den Erfindungsgedanken einzuschränken, und soll lediglich zur Erläuterung der Vorteile der Erfindung dienen.

Wenn eine Funkkommunikation zum Flightmanager für Flug 454 der Gesellschaft 1 gewünscht wird, richtet der Rufende einen Rufwunsch unter der entsprechenden Objektbezeichnung an die Zentrale, die mit Bezug zur Objektbezeichnung die dem gewünschten Flightmanager nach dessen Arbeitsaufnahme zugeteilte Rufnummer bereits gespeichert hat und diese daher schnell ermittelt. Der Aufbau der Verbindung kann durch den Rufenden selbst nach Abfrage der Rufnummer, vorzugsweise aber auch unmittelbar durch die Zentrale mit der zugeteilten Rufnummer erfolgen. Die Teilnehmergeräte empfangen den Ruf, aber nur das Gerät des gerufenen Flightmangagers stellt Übereinstimmung der empfangenen Rufnummer mit der bei ihm gespeicherten Rufnummer fest und wertet z.B. ein dabei übermitteltes Telegramm aus.

Ein Teilnehmer der in seinem Gerät seine objektbezogene Rufnummer gespeichert hat, kann für einen Rufwunsch an andere Teilnehmer, die sich mit derselben Objektbezeichnung bei der Zentrale gemeldet und daraufhin diesselbe Rufnummer zugeteilt erhalten haben, den Rufwunsch auch unter Zugriff auf seinen Rufnummernspeicher direkt durch die gespeicherte Nummer kennzeichnen.

Ein Teilnehmer kann nebeneinander für verschiedene Tätigkeiten, Objekte usw. zuständig sein und dementsprechend mehrere Anforderungen an die Zentrale richten und damit mehrere objektbezogene zugeteilte Rufnummern in seinem Gerät einspeichern. Nach Abschluß einer Tätigkeit meldet der Teilnehmer dies der Zentrale und der entsprechende Rufnummerneintrag wird im Gerät und in der Zentrale gelöscht. Ein Abschalten des Teilnehmergeräts löst die Löschung aller Nummerneinträge aus.

Nach vollständiger Abarbeitung eines Objekts (Flugnummer) sind alle aus Anlaß der Arbeiten an diesem Objekt zugeteilten Rufnummern gelöscht und können auf neue Anforderungen mit völlig anderen Objektbezeichnungn neu zugeteilt werden. Daraus ist ersichtlich, daß eine hohe Zahl verschiedener Objektbezeichnungen durch eine vergleichsweise geringe Anzahl von zuteilbaren Rufnummern abgedeckt werden kann.

Besondere Vorteile ergeben sich, wenn Objektbezeichnungen und zugeteilte Rufnummern jeweils gruppenweise derart zusammengefaßt sind, daß jeder Gruppe eine diese Gruppe kennzeichnende Objektgruppenbezeichnung bzw. Gruppenrufnummer zugeordnet ist. Bei Aussenden einer Gruppenrufnummer werden alle Teilnehmergeräte, die eine Rufnummer aus der zugehörigen Rufnummerngruppe gespeichert haben, gleichzeitig adressiert. Bei einem Rufwunsch an die Zentrale unter Angabe einer Objektgruppenbezeichnung behandelt die Zentrale diesen Rufwunsch als Rufwunsch im Umfang aller Objektbezeichnungender Gruppe. Für die als Beispiel bereits angegebene Liste von Objektbezeichnungen ergänzt durch zugeteilte Rufnummern könnte unter Einführung eines Ersatzwerts (Joker) für einzelne Stellen der Objektbezeichnungen oder Rufnummern, die für jeden beliebigen anderen Wert an dieser Stelle gelten, beispielsweise angegeben werden (Ersatzwert 0)

| Objektbezeichnung | zuget. Rufnummer (Hex-Code) |
|---|---|
| 11 - 454 | A 441 |
| 12 - 454 | A 442 |
| 13 - 454 | A 443 |
| 21 - 743 | A 541 |
| 22 - 743 | A 542 |
| 23 - 743 | A 543 |

Objektgruppenbezeichnung für alle Tankwagenfahrer 03 - 000, Gruppenrufnummer A 043
oder
Objektgruppenbezeichnung für alle am Flug 454 der Gesellschaft 1 Tätigen 10 - 454, Gruppenrufnummer A 440.

Aus den Beispielen ist das Prinzip der einfachen und vorteilhaften Gruppenzusammenfassung ersichtlich. Andere Gruppenbildungen sind selbstverständlich möglich und am jeweiligen Einsatzfall auszurichten, der insbesondere in keiner Weise auf die beschriebenen Informationsgehalt der Objektbezeichnungen oder ähnliche Situationen beschränkt sein soll.

Ein weiteres vorteilhaftes Anwendungsbeispiel wären beispielsweise für eine komplexe, insbesondere auch weiträumig verteilte Fertigungsanlage mit einer Mehrzahl von Bearbeitungsstationen zu sehen, bei welcher Facharbeiter unterschiedlicher Spezialisierung (Fertigungstechniker, Servicepersonal etc.) an wechselnden Maschinen und zur Erledigung verschiedener Arbeiten (Einrichten, Reparieren etc.) tätig werden können und dabei jeweils über ein Teilnehmergerät für ein erfindungsgemäßes Funksystem erreichbar sind.

Eine weitere Ausgestaltung eines Selektiv-Funksystems, die unabhängig von oder zusätzlich zu dem vorstehend ausführlich beschriebenen Funksystem vorteilhaft ist, sieht vor, nicht alle von der Codierung her möglichen Rufnummern als eigene oder ggf. zugeteilte Rufnummern (und Gruppenrufnummern) zuzulassen, sondern eine Gruppe von möglichen Rufnummern als Sondernummern freizuhalten und in jedem Teilnehmergerät eine Zuordnungsvorschrift einzuspeichern, nach der zu jeder Sondernummer ein Teil einer Objektbezeichnung auf einen festgelegten Abschnitt der Struktur der Objektbezeichnungen bestimmt werden kann. Jedes Teilnehmergerät enthält außerdem einen Objektbezeichnungsspeicher, in dem über eine Tastatur oder dergleichen Objektbezeichnungen eingebbar (und löschbar) sind. Beim Empfang einer Sondernummer leitet jedes Teilnehmergerät mittels der Zuordnungsvorschrift den genannten Teil einer Objektbezeichnung daraus ab und überprüft den Inhalt seines Objektbezeichnungsspeichers, ob die gespeicherte Objektbezeichnung in ihrem entsprechenden Abschnitt mit dem abgeleiteten Objektbezeichnungen-Teil übereinstimmen. Gegebenenfalls wird die Information des Funkrufs ausgewertet, z.B. ein mit einem Telegramm empfangener Befehl ausgeführt.

## Patentansprüche

1. Verfahren zur Rufnummernzuteilung und Funkkommunikation in einem Funksystem mit einer Zentrale und mehreren über individuelle eigene Rufnummern selektiv anrufbaren Teilnehmern, mit folgenden Merkmalen:
es sind mehrere Objektbezeichnungen vorgesehen, die von den in dem Funksystem zulässigen Rufnummern unterscheidbar sind;
auf Anforderung eines Teilnehmers, die die individuelle Teilnehmerrufnummer und eine Objektbezeichnung enthält, an die Zentrale teilt diese aufgrund einer gespeicherten Zuordnungsvorschrift dem anfordernden Teilnehmer eine objektbezogene Rufnummer zu und übermittelt diese an den anfordernden Teilnehmer;
die von der Zentrale übermittelte objektbezogene Rufnummer wird im Gerät des anfordernden Teilnehmers mit Bezug zur Objektbezeichnung und in der Zentrale mit Bezug zur Objektbezeichnung und zum anfordernden Teilnehmer gespeichert;
die Zentrale ermittelt auf einen an sie von einem Teilnehmer gerichteten Objekt-Rufwunsch, der eine Objektbezeichnung enthält, nach Maßgabe der angegebenen Objektbezeichnung und der zugeteilten Rufnummern, die zugehörige, die Herstellung der gewünschten Funkkommunikation ermöglichende objektbezogene Rufnummer in ihrem Speicher und stellt die gewünschte Funkverbindung zu dem oder den gewünschten Teilnehmer(n) her,
ein Teilnehmer, der andere Teilnehmer mit derselben Objektbezeichnung anruft, greift hierzu auf die bei sich gespeicherte objektbezogene Rufnummer zu und setzt mit dieser einen Direktruf ohne Vermittlung der Zentrale ab.

2. Verfahren nach Anspruch 1, dadurch gekennzeichnet, daß die für die Zuteilung durch die Zentrale zulässigen Rufnummern gruppenweise derart zusammengefaßt sind, daß jeder Gruppe eine die Gruppe kennzeichnende Gruppenrufnummer zugeordnet ist und durch Aussenden der Gruppenrufnummer alle Teilnehmergeräte, denen eine der Rufnummern der Gruppe zugeteilt ist, gleichzeitig adressierbar sind.

3. Verfahren nach Anspruch 2, dadurch gekennzeichnet, daß die zulässigen Objektbezeichnungen gruppenweise derart zusammengefaßt sind, daß jeder Gruppe eine die Gruppe kennzeichnende Objektgruppenbezeichnung zugeordnet ist und daß die Zentrale einen Rufwunsch unter Angabe der Objektgruppenbezeichnung als Rufwunsch im Umfang aller Objektbezeichnungen der Gruppe behandelt und eine geeignete Gruppenrufnummer ermittelt.

4. Verfahren nach Anspruch 1, dadurch gekennzeichnet, daß ein Teilnehmer mehrere Anforderungen mit unterschiedlichen Objektbezeichnungen an die Zentrale richten kann.

5. Verfahren nach einem der vorhergehenden Ansprüche, dadurch gekennzeichnet, daß eine zugeteilte Rufnummer auf Veranlassung des betroffenen Teilnehmers gelöscht wird.

6. Verfahren nach Anspruch 1, dadurch gekennzeichnet, daß die Teilnehmergeräte einen Objektbezeichnungsspeicher aufweisen, in den mehrere Objektbezeichnungen einspeicherbar sind, daß eine Gruppe von möglichen Rufnummern als Sondernummern freigehalten ist, daß in jedem Teilnehmergerät eine Zuordnungsvorschrift derart, daß zu einer bestimmten Sondernummer ein Teil einer Objektbezeichnung in einem festgelegten Abschnitt der Struktur der Objektbezeichungen ableitbar ist, abgespeichert wird, daß jedes Teilnehmergerät für Empfang einer Sondernummer anhand der im Gerät gespeicherten Zuordnungsvorschrift einen Teil einer Objektbezeichnung ableitet, die ggf. im Objektbezeichnungsspeicher abgelegten Objektbezeichnungen in dem festgelegten Abschnitt auf Übereinstimmung mit dem abgeleiteten Teil überprüft und zutreffendenfalls die mit der Sondernummer übermittelte Information auswertet.

## Claims

1. Method for assigning dial numbers and for the radio communication in a radio system, comprising a central station and a plurality of subscribers selectively reachable through individual dial numbers, comprising the following features:
a plurality of object characterizations are provided, which can be distinguished from dial numbers admitted in the radio system;
upon a subscriber's request, which contains the individual subscriber call number and an object characterization, to the central station, this central station informs the requesting subscriber on the basis of a memorized assignment rule of an object-related dial number and transmits this dial number to the requesting subscriber;
the object-related dial number transmitted by the central station is memorized in the apparatus of the requesting subscriber under reference to the object characterization and in the central station under reference to the object characterization and to the requesting subscriber;
upon an object call request directed to the central station by a subscriber and comprising an object characterization, and depending on the indicated object characterization and the assigned dial number the central station detects the respective object-related dial number in its memory and enables the establishment of the requested radio communication and sets up the desired radio communication to the requested subscriber(s),
a subscriber, who calls other subscribers having the same object characterization, uses the object-related dial number memorized in his/her apparatus and dispatches by this number a direct call without intervention of the central station.

2. A method according to claim 1, characterized in that the dial numbers admitted for the assignment by the central station are combined in groups in a manner that a group dial number characterizing the group is assigned to each group and all subscriber apparatuses to which one of the dial number of the group is assigned can be addressed simultaneously by transmitting the group dial number.

3. A method according to claim 2, characterized in that the admissible object characterizations are combined in groups in a manner that an object group characterization characterizing the group is assigned to each group, and that the central station treats a call request comprising the object group characterization as a call request in the scope of all object characterizations of the group and determines a suitable group dial number.

4. A method according to claim 1, characterized in that a subscriber can direct a plurality of requests with different object characterizations to the central station.

5. A method according to one of the preceding claims, characterized in that an assigned dial number is cancelled upon request of the respective subscriber.

6. A method according to claim 1, characterized in that the subscriber apparatuses comprise an object characterization memory into which a plurality of object characterizations can be stored, that a group of possible dial numbers is kept free from special numbers, that in each subscriber apparatus an assignment rule is memorized so that from a certain special number a part of an object characterization in a predefined section of the structure of the object characterizations can be derived, that each subscriber apparatus for receiving a special number derives a part of an object characterization by means of the assignment rule memorized in the apparatus, eventually checks the object characterizations memorized in the object characterization memory in the predetermined section upon correspondence with the derived part and in case of correspondence evaluates the information transmitted by the special number.

## Revendications

1. Procédé d'attribution de numéros d'appel et de communication radio dans un système radio comportant une centrale et plusieurs abonnés pouvant être appelés sélectivement par l'intermédiaire de numéros d'appel propres et individuels, présentant les propriétés ci-après :
il est prévu plusieurs désignations d'objet, susceptibles d'être distinguées vis-à-vis des numéros d'appel autorisés dans le système radio ;
sur la requête d'un abonné, contenant le numéro d'appel d'abonnés individuels et une désignation d'objet, cette requête étant faite à la centrale, cette dernière, sur la base d'une prescription d'allocation stockée en mémoire, attribue à l'abonné produisant la requête un numéro d'appel lié objet et le transmet à l'abonné ayant effectué la requête;
le numéro d'appel lié objet transmis par la centrale est stocké en mémoire dans l'appareil de l'abonné ayant fait la requête, en référence à la désignation objet, et est stocké en mémoire dans la centrale, en référence à la désignation objet et à l'abonné ayant fait la requête ;
la centrale, lorsqu'un appel lié objet, contenant une désignation objet, est souhaité par un abonné, selon les indications de la désignation objet indiquée et des numéros d'appel attribués, détermine le numéro d'appel lié objet associé permettant l'établissement de la communication radio souhaitée, ceci se faisant dans la mémoire de la centrale et établit la liaison radio souhaitée vers le ou les abonné(s) souhaité(s),
un abonné, qui appelle d'autres abonnés avec la même désignation objet, a à cette fin accès au numéro d'appel lié objet stocké en mémoire chez lui et établit à l'aide de celui-ci un appel direct, sans l'intermédiaire de la centrale.

2. Procédé selon la revendication 1, caractérisé en ce que les numéros d'appel admissibles par la centrale pour l'allocation sont rassemblés par groupes, de manière qu'à chaque groupe soit associé un numéro d'appel de groupe caractérisant le groupe et que, par envoi des numéros d'appel de groupe, on puisse effectuer simultanément l'adressage de tous les appareils abonnés auxquels est attribué l'un des numéros d'appel du groupe.

3. Procédé selon la revendication 2, caractérisé en ce que les désignations objets admissibles sont rassemblées par groupes, de manière qu'à chaque groupe soit associée une désignation de groupes d'objets caractérisant le groupe, et en ce que la centrale traite un souhait d'appel, avec indication de la désignation de groupe objet, comme étant un souhait d'appel, dans la limite de toutes les désignations d'objets du groupe, et détermine un numéro d'appel de groupe approprié.

4. Procédé selon la revendication 1, caractérisé en ce qu'un abonné peut adresser à la centrale plusieurs requêtes ayant une désignation d'objet différente.

5. Procédé selon l'une des revendications précédentes, caractérisé en ce qu'un numéro d'appel attribué est effacé à l'initiative de l'abonné concerné.

6. Procédé selon la revendication 1, caractérisé en ce que les appareils d'abonnés présentent une mémoire de désignation d'objets dans laquelle plusieurs désignations d'objets peuvent être stockées, en ce qu'un groupe de numéros d'appel possibles est laissé libre à titre de numéros spéciaux, en ce que dans chaque appareil d'abonné est stockée en mémoire une prescription d'affectation, de manière que, pour un numéro spécial déterminé, une partie d'une désignation objet dans une section fixée de la structure des désignations objet puisse être dérivée, en ce que chaque appareil d'abonnés dérive, pour la réception d'un numéro spécial à l'aide de la prescription d'affectation stockée en mémoire, une partie d'une désignation d'objet qui, le cas échéant, vérifie des désignations d'objets ayant été placées dans la mémoire de désignation objet, dans la section fixée, pour vérifier la coïncidence avec la partie dérivée et, dans l'affirmative, exploite l'information transmise à l'aide du numéro spécial.
